# EUROPEAN PATENT APPLICATION

(11) **EP 4 789 933 A1**
(43) Date of publication of application: **12.08.2026**
(21) Application number: 24881645.6
(22) Date of filing: 23.10.2024
(51) Int. Cl.: B60T 13/74

(54) **BRAKING MECHANISM, BRAKING SYSTEM, AND VEHICLE**

(30) Priority: 24.10.2023 CN 202311398472
(71) Applicant: HUAWEI TECHNOLOGIES CO., LTD., Shenzhen 518129 (CN)
(72) Inventor: WANG, Xing, Shenzhen, Guangdong 518129 (CN); LI, Jingjing, Shenzhen, Guangdong 518129 (CN); ZHOU, Jinlong, Shenzhen, Guangdong 518129 (CN)
(74) Representative: Pfenning, Meinig & Partner mbB
(86) International application number: PCT/CN2024/126719
(87) International publication number: WO 2025/087281

(57) **Abstract**

A brake mechanism (100) is provided. The brake mechanism (100) includes a fastening portion (14), a drive mechanism (13), a first piston (210), a second piston (212), and an elastic component (202). The drive mechanism (13) is configured to: drive the first piston (210) to move towards the brake disc (211) in a first direction, and drive the second piston (212) to move towards the brake disc (211) in a second direction. The elastic component (202) is configured to: when the brake disc (211) is in contact with the first piston (210), drive the first piston (210) and the second piston (212) to move in the second direction. In this way, forces on the two sides of the brake disc are balanced. This avoids uneven wear and improves braking performance. In addition, a brake system and a vehicle are also involved.

## Description

This application claims priority to Chinese Patent Application No. 202311398472.2, filed with the China National Intellectual Property Administration on October 24, 2023 and entitled "BRAKE MECHANISM, BRAKE SYSTEM, AND VEHICLE", which is incorporated herein by reference in its entirety.

### TECHNICAL FIELD

Embodiments of this application relate to the field of vehicle technologies, and in particular, to a brake mechanism, a brake system, and a vehicle.

### BACKGROUND

In an electronic park brake (electrical park brake, EPB), a conventional mechanical handbrake is changed into an electronic control handbrake, and a parking brake technology may be combined with a service brake technology.

A brake mechanism of the EPB includes a drive mechanism, and a first piston and a second piston that are disposed on two sides of a brake disc. The drive mechanism may push the first piston and the second piston to move towards each other, so that the first piston and the second piston are locked up with the brake disc of a vehicle, to implement braking.

However, when the brake disc receives different pressing forces from the first piston and the second piston, for example, when one of the first piston and the second piston is in contact with the brake disc, and the other is not in contact with the brake disc, the brake disc receives only a pressing force from the first piston or the second piston, and forces on the two sides are unbalanced. This causes uneven wear on the two sides of the brake disc, and a side that is of the brake disc and that is in contact with the piston is more worn. Consequently, forces on the two sides are inconsistent, affecting braking effect.

### SUMMARY

Embodiments of this application provide a brake mechanism, a brake system, and a vehicle, to resolve a problem that the brake mechanism is prone to uneven wear.

To achieve the foregoing objectives, the following technical solutions are used in embodiments of this application.

According to a first aspect of embodiments of this application, a brake mechanism is provided. The brake mechanism includes a fastening portion, a drive mechanism, a first piston, a second piston, and an elastic component. The first piston and the second piston are respectively disposed on two sides of a brake disc, and both the first piston and the second piston are in transmission connection to the drive mechanism. The drive mechanism is connected to the fastening portion through the elastic component. The drive mechanism is configured to: drive the first piston to move towards the brake disc in a first direction and drive the second piston to move towards the brake disc in a second direction. The first direction is opposite to the second direction. The elastic component is configured to drive the drive mechanism, the first piston, and the second piston to move in the second direction when the brake disc is in contact with the first piston; or the elastic component is configured to drive the drive mechanism, the first piston, and the second piston to move in the first direction when the brake disc is in contact with the second piston. Therefore, when the first piston or the second piston is in contact with the brake disc and uneven wear occurs between the first piston or the second piston and the brake disc, a reactive force of the brake disc on the first piston or the second piston is transmitted to the drive mechanism through the first piston or the second piston, and then is transmitted to the elastic component through the drive mechanism. The elastic component may drive the drive mechanism, the first piston, and the second piston to move in an opposite direction as a whole, so that forces on two sides of the brake disc are balanced. This avoids uneven wear occurring due to the first piston or the second piston being in contact with the brake disc, and improves braking performance.

In an optional implementation, a moving torque of the piston is less than a trigger threshold of the elastic component. When neither the first piston nor the second piston is in contact with the brake disc, the elastic component is in a compressed state. When there is a deviation between a distance from the first piston to the brake disc and a distance from the second piston to the brake disc, and the first piston or the second piston is in contact with the brake disc, a contact force between the piston and the brake disc increases. When the contact force reaches a specific threshold and exceeds the trigger force of the elastic component, the first piston and the second piston may be pushed to move in a direction opposite to the contact force.

In an optional implementation, the drive mechanism includes a transmission shaft and a first transmission component. The transmission shaft is in a transmission connection to an output shaft of a motor, the motor is fastened to the fastening portion, and the first transmission component is configured to: convert a rotatory motion of the transmission shaft into a linear motion, and transmit the linear motion to the first piston. In this way, the transmission shaft of the drive mechanism is in transmission connection to the output shaft of the motor, so that motor driving can be implemented. The motor drive mechanism may be used in a parking braking mode.

In an optional implementation, a first guide portion is disposed on the output shaft of the motor, a first movable portion that matches the first guide portion is disposed on the transmission shaft, the first guide portion is capable of driving the first movable portion to rotate with the transmission shaft, the first movable portion is capable of moving along the first guide portion, and an extension direction of the first guide portion is parallel to the first direction. In this way, the first guide portion and the first movable portion are disposed between the output shaft of the motor and the transmission shaft, and the transmission shaft can be in transmission connection to the output shaft of the motor through cooperation of the first guide portion and the first movable portion, so that the torque output by the motor can be transmitted to the transmission shaft. In addition, when the drive mechanism, the first piston, and the second piston move relative to the fastening portion under an action of the elastic component, the transmission shaft may move relative to the output shaft of the motor with the drive mechanism.

In an optional implementation, the first transmission component includes a first gear, a second gear, a first screw, and a first screw nut, where the first gear is sleeved on the transmission shaft, the second gear is sleeved on the first screw, the first gear meshes with and the second gear, the first screw nut is in threaded connection to the first screw, and the first piston is connected to the first screw nut; and the first gear and the second gear are configured to transmit a rotatory motion of the transmission shaft to the first screw nut through the first screw, and the first screw nut is configured to: convert a rotatory motion of the first screw into a linear motion, and drive the first piston to move. In this way, the first transmission component may convert the rotatory motion of the transmission shaft into a linear motion, and transmit the linear motion to the first piston.

In an optional implementation, the brake mechanism further includes a second screw that is in transmission connection to the transmission shaft, where the second screw is in transmission connection to the second piston, and a thread rotation direction of the first screw is opposite to a thread rotation direction of the second screw. In this way, under driving of the first screw and the second screw, the first piston and the second piston may move close to each other to implement braking or move away from each other to release wheel lockup.

In an optional implementation, the brake mechanism further includes a first housing, where the transmission shaft is connected to the first housing through a first bearing, and the first screw is connected to the first housing through a second bearing. In this way, the first housing may be configured to fasten the transmission shaft and the first screw.

In an optional implementation, the first housing is connected to the fastening portion through the elastic component. In this way, the first housing may drive the drive mechanism to move relative to the fastening portion under an action of the elastic component.

In an optional implementation, the fastening portion includes a second guide portion, where the first housing is movably connected to the fastening portion through the second guide portion, the first housing can move relative to the fastening portion along the second guide portion, and an extension direction of the second guide portion is parallel to the first direction. In this way, the second guide portion is disposed, so that the first housing can be prevented from floating in the fastening portion.

In an optional implementation, the drive mechanism includes a hydraulic pipe and a second cavity connected to the hydraulic pipe, where the first piston is disposed in the second cavity, and the first piston is configured to move in the first direction when brake fluid is supplied to the second cavity through the hydraulic pipe. In this way, the drive mechanism may implement hydraulic driving, to implement service braking.

In an optional implementation, the fastening portion includes a fourth guide portion, where the first piston is disposed in the fourth guide portion, and the first piston is capable of moving along the fourth guide portion. In this way, the first piston can be prevented from floating in the fourth guide portion.

In an optional implementation, the brake mechanism further includes a second housing, where the second housing is connected to the drive mechanism, the second housing is at least partially disposed in the fourth guide portion, and the second cavity is enclosed by the second housing, the third guide portion, and the first piston. In this way, when the brake fluid is supplied to the second cavity, the first piston can be pushed to move, to implement braking.

In an optional implementation, the first screw nut includes a third guide portion, where the first piston includes a second movable portion, the third guide portion can drive the second movable portion to rotate with the first screw nut, the second movable portion can move along the third guide portion, and an extension direction of the third guide portion is parallel to the first direction. In this way, under an action of the hydraulic fluid, the first piston can move relative to the screw nut, to implement braking.

In an optional implementation, a first sealing member is disposed between the third guide portion and the second housing; and a second sealing member is disposed between the first piston and the third guide portion. In this way, the brake fluid can be prevented from leaking from a gap between the third guide portion and the second housing, and leaking from a gap between the first piston and the third guide portion. This improves sealing performance.

According to a second aspect of embodiments of this application, a brake system is provided. The brake system includes a controller and the foregoing brake mechanism. The controller is electrically connected to the drive mechanism, and the controller is configured to control the drive mechanism to drive the first piston and the second piston to approach or move away from the brake disc. In this way, the brake system adopts the foregoing brake mechanism, to prevent uneven wear of the brake disc and improve brake performance.

According to a third aspect of embodiments of this application, a vehicle is provided. The vehicle includes wheels and the foregoing brake system. The wheel is fastened to the brake disc of the brake system. In this way, the vehicle adopts the foregoing brake system, to prevent uneven wear of the brake disc and improve brake performance.

Embodiments of this application provide a brake mechanism, a brake system, and a vehicle. The brake mechanism includes a fastening portion, a drive mechanism, a first piston, a second piston, and an elastic component. The first piston and the second piston are respectively disposed on two sides of a brake disc, and both the first piston and the second piston are in transmission connection to the drive mechanism. The drive mechanism is connected to the fastening portion through the elastic component. The drive mechanism is configured to: drive the first piston to move towards the brake disc in a first direction and drive the second piston to move towards the brake disc in a second direction. The first direction is opposite to the second direction.

In some embodiments, the drive mechanism includes a transmission shaft, a first gear, a second gear, a first screw, and a first screw nut. The transmission shaft is in transmission connection to an output shaft of a motor, the motor is fastened to the fastening portion, the first gear is sleeved on the transmission shaft, the second gear is sleeved on the first screw, the first gear meshes with and the second gear, the first screw nut is in threaded connection to the first screw, and the first piston is connected to the first screw nut; and the first gear and the second gear are configured to transmit a rotatory motion of the transmission shaft to the first screw nut through the first screw, and the first screw nut is configured to: convert a rotatory motion of the first screw into a linear motion, and drive the first piston to move. In this way, the drive mechanism may convert a rotatory motion of the output shaft of the motor into a linear motion, and transmit the linear motion to the first piston, to implement motor driving. The motor drive mechanism may be used in a parking braking mode. The drive mechanism includes a motor drive mechanism used in a parking braking scenario and a hydraulic drive mechanism used in a service braking scenario.

In some embodiments, the drive mechanism includes a hydraulic pipe and a second cavity connected to the hydraulic pipe, where the first piston is disposed in the second cavity, and the first piston is configured to move in the first direction when brake fluid is supplied to the second cavity through the hydraulic pipe. In this way, the drive mechanism may implement hydraulic driving, to implement service braking. The motor drive mechanism may drive, through one motor, pistons on the two sides to move, to improve drive efficiency, and implement a braking function of a fastening caliper during driving.

The elastic component is configured to drive the drive mechanism, the first piston, and the second piston to move in the second direction when the brake disc is in contact with the first piston and uneven wear occurs between the brake disc and the first piston; or the elastic component is configured to drive the drive mechanism, the first piston, and the second piston to move in the first direction when the second piston is in contact with the brake disc and uneven wear occurs between the brake disc and the second piston. Therefore, in the service braking scenario or the parking braking scenario, when the first piston or the second piston is in contact with the brake disc and uneven wear occurs between the first piston or the second piston and the brake disc, a reactive force of the brake disc on the first piston or the second piston is transmitted to the drive mechanism through the first piston or the second piston in contact with the brake disc in sequence, and then is transmitted to the elastic component through the drive mechanism. The elastic component elastically deforms under driving of the reactive force, and then may drive the drive mechanism, the first piston, and the second piston to move as a whole in a direction opposite to a direction of uneven wear, so that forces on the two sides of the brake disc are balanced. This avoids uneven wear and improves braking performance.

### BRIEF DESCRIPTION OF DRAWINGS

FIG. 1 is a diagram of a structure of a vehicle;
FIG. 2 is a diagram of a structure of a brake system according to an embodiment of this application;
FIG. 3 is a diagram of a structure of a brake mechanism;
FIG. 4 is a module diagram of a brake mechanism according to an embodiment of this application;
FIG. 5 is a diagram of a structure of a brake mechanism according to an embodiment of this application;
FIG. 6 is a diagram of a structure of a first housing in FIG. 5;
FIG. 7 is a diagram of the brake mechanism in FIG. 5 in a parking braking state;
FIG. 8 is a diagram of the brake mechanism in FIG. 5 in an uneven wear state;
FIG. 9 is a diagram of the brake mechanism in FIG. 5 after elimination of an uneven wear state;
FIG. 10 is a diagram of a structure of a brake mechanism according to an embodiment of this application;
FIG. 11 is a diagram of the brake mechanism in FIG. 10 in a service braking state; and
FIG. 12 is a flowchart of a control method for a brake mechanism according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first", "second", and the like are merely intended for a purpose of description, and shall not be understood as an indication or implication of relative importance or implicit indication of a quantity of indicated technical features. Therefore, features defined with "first", "second", and the like may explicitly or implicitly include one or more such features.

In addition, in this application, direction terms such as "up", "down", "left", "right", "horizontal", and "vertical" are defined relative to directions and locations in which components in the accompanying drawings are schematically placed. It should be understood that these directional terms are relative concepts, are used for relative description and clarification, and may correspondingly change based on changes in the directions and locations in which the components in the accompanying drawings are placed.

In this application, unless otherwise clearly specified and limited, a term "connection" should be understood in a broad sense. For example, the "connection" may be a fixed connection, a detachable connection, or an integral connection, may be a direct connection, or may be an indirect connection through an intermediate medium.

To make the objectives, technical solutions, and advantages of this application clearer, the following further describes this application in detail with reference to the accompanying drawings.

This application provides a brake system, which may be used in a control system of a vehicle like an intelligent vehicle, a connected vehicle, a new energy vehicle, or an autonomous driving vehicle.

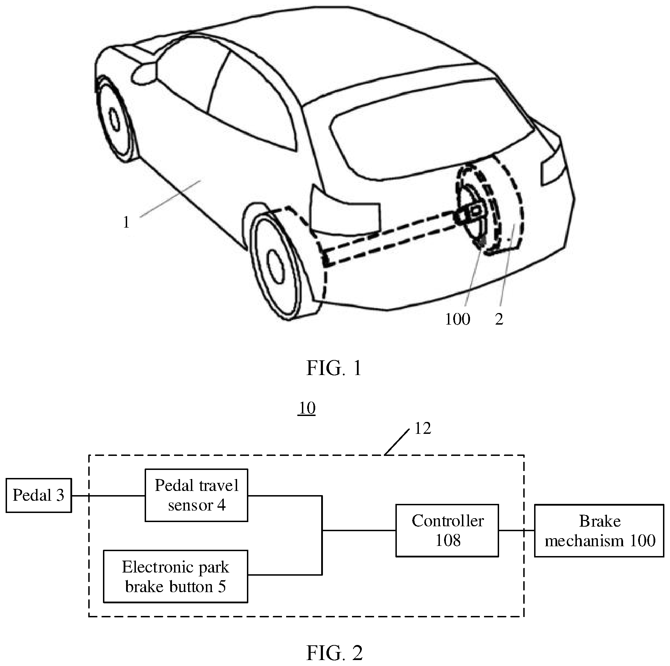

FIG. 1 is a diagram of a structure of a vehicle according to an embodiment of this application. The vehicle may include a vehicle body 1, wheels 2, and a brake mechanism 100. The brake mechanism 100 may act on the wheel 2 to provide a braking force for the vehicle, to stop the running vehicle. It should be noted that FIG. 1 schematically shows only some components included in the vehicle. Actual shapes, actual sizes, actual positions, and actual structures of these components are not limited by FIG. 1 and the following accompanying drawings. In some embodiments, the vehicle may further include apparatuses such as a powertrain and a transmission system. Details are not described herein.

FIG. 2 is a diagram of a system architecture of an electro-mechanical brake according to an embodiment of this application. As shown in FIG. 2, the electro-mechanical brake 10 includes a brake mechanism 100 and a control system 12. The control system 12 may include a pedal travel sensor 4, an electronic park brake (electrical park brake, EPB) button 5, and a controller 108. The pedal travel sensor 4 is connected to a pedal 3 of a vehicle, and both the pedal travel sensor 4 and the electronic park brake button 5 are in signal connection to the controller 108. The controller 108 is connected to the brake mechanism 100.

The following describes an operating process of the electro-mechanical brake 10 with reference to FIG. 2.

If the vehicle is in a driving state, when a user steps on the pedal 3, the pedal travel sensor 4 receives a signal and transmits the signal to the controller 108. The controller 108 receives the signal, and controls the brake mechanism 100 to activate a braking mode, to implement service braking.

If the vehicle is in an off state, when the user presses the electronic park brake button 5, a braking signal is transmitted to the controller 108. The controller 108 receives the signal, and controls the brake mechanism 100 to activate the braking mode, to implement parking braking. In this way, when the vehicle is turned off, even if the user forgets to pull a handbrake, the system may automatically complete parking; and when the vehicle starts, if a driver forgets to release the handbrake, parking braking may also be automatically released. When the vehicle starts on a slope, the vehicle may not roll back. This makes the vehicle more intelligent, simpler, and safer, and reduces an accident rate.

The brake mechanism may be classified into a hydraulic brake mechanism and an electro-mechanical brake mechanism based on a braking mode. Compared with the hydraulic brake mechanism, the electro-mechanical brake mechanism does not have brake fluid, and has advantages such as fast response, reliable performance, safety, and environmental protection. An EMB apparatus (brake mechanism) is a mechanical structure that uses a wheel-end motor to drive a gear box, so as to drive a rotatory motion to be converted into a linear motion. The EMB apparatus has advantages such as simple arrangement, fast response, and high efficiency. Therefore, this can better meet development requirements of the vehicle in terms of safety, efficiency, and the like, and can particularly adapt to an electrification development requirement of the vehicle.

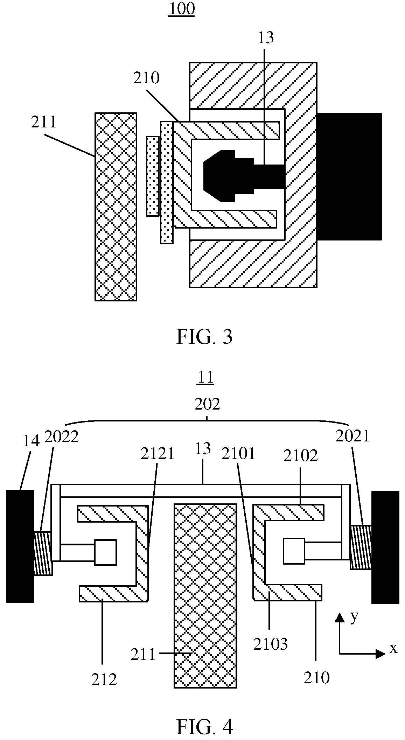

FIG. 3 is a diagram of a structure of a brake mechanism. As shown in FIG. 3, the brake mechanism includes a drive mechanism 13 and a piston 210. The drive mechanism 13 may drive the piston to move, so that the piston 210 is locked up with a brake disc 211, to implement parking braking. Lockup can be released by reversing a motor.

However, in the brake mechanism, one motor drives one piston, easily causing uneven wear. The brake mechanism cannot implement floating adjustment.

In this way, an embodiment of this application provides an improved brake mechanism. As shown in FIG. 4, the brake mechanism 100 includes a fastening portion 14, a drive mechanism 13, a first piston 210, a second piston 212, and an elastic component 202.

In some embodiments, the brake disc 211 is mounted to a wheel hub of the wheel 2. The first piston 210 and the second piston 212 are respectively disposed on two sides of the brake disc 211, and both the first piston 210 and the second piston 212 are in transmission connection to the drive mechanism 13. The drive mechanism 13 is configured to drive the first piston 210 and the second piston 212 to move close to each other to squeeze the brake disc 211.

One end of the elastic component 202 may be connected to the fastening portion 14, and the other end is connected to the drive mechanism 13.

In some embodiments, the fastening portion 14 is connected to the vehicle body 1 to implement stable structural connection.

In some other embodiments, the fastening portion is the vehicle body 1.

In some embodiments, a first caliper (not shown in the figure) is connected to a side that is of a first side wall 2101 and that faces a second side wall 2121, and a first friction surface is formed on a side that is of the first caliper and that faces the second side wall 2121. A second caliper (not shown in the figure) is fastened to a side that is of the second side wall 2121 and that faces the first side wall 2101, and a second friction surface is formed on a side that is of the second caliper and that faces the first side wall 2101. A part of the brake disc 211 is located between the first friction surface and the second friction surface. The first piston 210 and the second piston 212 may move relative to the brake disc 211, that is, the first piston 210 and the second piston 212 may drive the first caliper and the second caliper to move towards the brake disc 211.

In some embodiments, under an action of the drive mechanism 13, the first piston 210 may approach the brake disc 211 in a first direction, and the second piston 212 may approach the brake disc 211 in a second direction. The first direction is opposite to the second direction.

When at least one of the first piston 210 and the second piston 212 is in contact with the brake disc 211, the brake disc 211 receives a pressing force in the first direction, and/or receives a pressing force in the second direction. If the pressing force in the first direction is different from the pressing force in the second direction, uneven wear is easily caused on two sides of the brake disc 211. Consequently, forces on the two sides are inconsistent, affecting braking effect.

In this embodiment, when at least one of the first piston 210 and the second piston 212 is in contact with the brake disc 211, for example, when the brake disc 211 is in contact with the first piston 210 and uneven wear occurs between the brake disc 211 and the first piston 210, the brake disc 211 receives a pressing force in the first direction, and the elastic component 202 may drive the drive mechanism 13 to move in the second direction. The first piston 210 and the second piston 212 move accordingly, so that forces on the two sides of the brake disc 211 are consistent, and braking performance is improved.

Alternatively, when the brake disc 211 is in contact with the second piston 212 and uneven wear occurs between the brake disc 211 and the second piston 212, the brake disc 211 receives a pressing force in the second direction, and the elastic component 202 may drive the drive mechanism 13 to move in the first direction. The first piston 210 and the second piston 212 move accordingly, so that forces on the two sides of the brake disc 211 are consistent, and braking performance is improved.

In the brake mechanism provided in this embodiment of this application, the drive mechanism 13 is in transmission connection to the first piston 210 and the second piston 212, and the drive mechanism 13 is connected to the fastening portion 14 through the elastic component 202. When the first piston 210 or the second piston 212 is in contact with the brake disc 211 and uneven wear occurs between the first piston 210 or the second piston 212 and the brake disc 211, a reactive force of the brake disc 211 on the first piston 210 or the second piston 212 is transmitted to the drive mechanism 13 through the first piston 210 or the second piston 212, and then transmitted to the elastic component 202 through the drive mechanism 13. The elastic component 202 elastically deforms under driving of the reactive force, and may drive the drive mechanism 13, the first piston 210, and the second piston 212 to move as a whole in a direction opposite to a direction of uneven wear, so that the forces on the two sides of the brake disc 211 are balanced, to avoid uneven wear and improve braking performance.

Structures of the first piston 210 and the second piston 212 are not limited in this embodiment of this application. In some embodiments, the first piston 210 includes the first side wall 2101, and the second piston 212 includes the second side wall 2121. The first side wall 2101 and the second side wall 2121 are disposed opposite to each other, the first side wall 2101 and the second side wall 2121 are arranged in a direction x, and the first side wall 2101 and the second side wall 2121 are relatively fixed.

In some embodiments, still as shown in FIG. 4, the first piston 210 may further include a third side wall 2102 and a fourth side wall 2103 that are disposed opposite to each other in a direction y. Two ends of the first side wall 2101 are respectively connected to the third side wall 2102 and the fourth side wall 2103, so that the entire first piston 210 is generally in a frame shape, to help the third side wall 2102 and the fourth side wall 2103 be fixed relative to each other, and help an overall structure be stable. For a structure of the second piston 212, refer to the first piston 210. Details are not described herein again.

A structure of the elastic component 202 is not limited in this embodiment of this application. In some embodiments, the elastic component 202 may be an adjustment spring, and an axis of the adjustment spring is parallel to axes of the first piston 210 and the second piston 212. The adjustment spring may elastically deform, contract, or elongate along the axis, to drive a first housing 203 to move.

In some embodiments, the elastic component 202 includes a first elastic component 2021 and a second elastic component 2022, and the first elastic component 2021 and the second elastic component 2022 are symmetrically disposed on two sides of the first housing 203 with respect to the brake disc 211.

In this way, the elastic component 202 is symmetrically disposed with respect to the brake disc 211, to drive the first housing 203 to move in an axis direction.

In some embodiments, a moving torque of a piston is less than a trigger threshold of the elastic component 202. For example, when neither the first piston 210 nor the second piston 212 is in contact with the brake disc 211, the elastic component 202 is in a compressed state. When there is a deviation between a distance from the first piston 210 to the brake disc 211 and a distance from the second piston 212 to the brake disc 211, and the first piston 210 or the second piston 212 is in contact with the brake disc 211, a contact force between the piston and the brake disc 211 increases. When the contact force reaches a specific threshold and exceeds the trigger force of the elastic component 202, the first piston 210 and the second piston may be pushed to move in a direction opposite to the contact force.

In some embodiments, the brake mechanism may implement parking braking and service braking. The drive mechanism 13 includes a motor drive mechanism. The motor drive mechanism may be configured for parking braking. When the vehicle is turned off, a user presses an electronic park brake button, to transmit a braking signal to a controller. The controller receives the signal, and controls the brake mechanism to activate a braking mode. The motor drive mechanism drives the first piston 210 and the second piston 212 to move towards each other to approach the brake disc 211, so as to implement parking braking.

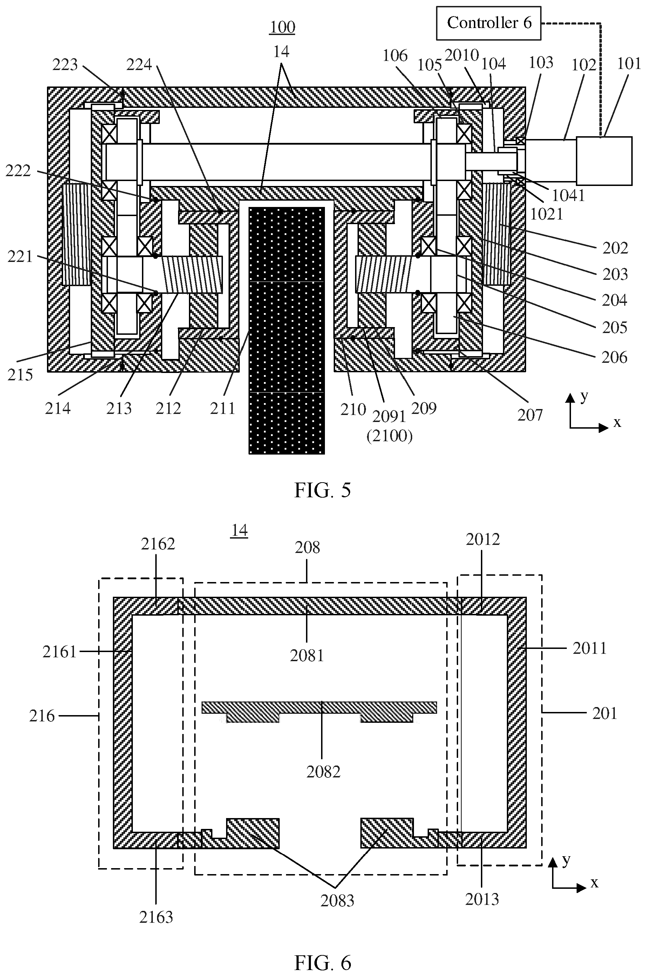

The following describes structures of the motor drive mechanism and the fastening portion 14 with reference to FIG. 5. As shown in FIG. 5, the motor drive mechanism includes a transmission shaft 104 and a first transmission component. The transmission shaft 104 is in transmission connection to an output shaft of a motor 101 through a gear box 102. The gear box 102 is configured to: perform deceleration and torque increase on a driving force output by the motor 101 and output the force to the transmission shaft 104.

In some embodiments, the motor 101 is fastened to the fastening portion 14, and the first transmission component is configured to: convert a rotatory motion of the transmission shaft 104 into a linear motion and transmit the linear motion to the first piston 210.

In this way, the transmission shaft of the drive mechanism is in transmission connection to the output shaft of the motor, so that motor driving can be implemented. The motor drive mechanism may be used in a parking braking mode.

A connection manner between the motor 101 and the fastening portion 14 is not limited in this embodiment of this application. In some embodiments, for example, a pinion bearing 103 is disposed on the fastening portion 14, and the output shaft of the motor 101 is rotatably connected to the pinion bearing 103.

In this embodiment, during parking braking, a torque of the motor 101 is transmitted to the transmission shaft 104. When uneven wear occurs, the transmission shaft 104 moves relative to the fastening portion 14 in an axial direction under an action of the elastic component 202, so that the transmission shaft 104 can rotate with the output shaft of the motor 101, and can move relative to the output shaft of the motor 101 in the axial direction.

Therefore, in some embodiments, a first guide portion 1021 is disposed on the output shaft of the motor 101, and a first movable portion 1041 that matches the first guide portion 1021 is disposed on the transmission shaft 104. The first guide portion 1021 may drive the first movable portion 1041 to rotate with the transmission shaft 104, and the first movable portion 1041 can move along the first guide portion 1021. An extension direction of the first guide portion 1021 is parallel to the first direction.

In this way, the transmission shaft 104 can be in transmission connection to the output shaft of the motor 101 through cooperation of the first guide portion 1021 and the first movable portion 1041, so that the torque output by the motor 101 is transmitted to the transmission shaft 104. In addition, when the first housing 203 moves in the fastening portion 14, the transmission shaft 104 may move relative to the output shaft of the motor 101 with the first housing 203.

In some embodiments, the first guide portion 1021 may be a guide rail, the first movable portion 1041 may be a protrusion, and the protrusion matches the guide rail.

In some other embodiments, the first guide portion 1021 may be an internal spline, and the first movable portion 1041 may be an external spline. For example, a first end of the output shaft of the motor 101 may have a first mounting hole, the first mounting hole is disposed in the first direction, and an inner wall of the first mounting hole has an internal spline. A first end of the transmission shaft 104 may extend into the first mounting hole, and an outer wall of the first end of the transmission shaft 104 has an external spline mating with the internal spline. Therefore, through mating of the internal spline and the external spline, the transmission shaft 104 can rotate with the output shaft of the motor 101 and can move in the axis direction relative to the output shaft of the motor 101.

A structure of the fastening portion 14 is not limited in this embodiment of this application. In some embodiments, the fastening portion 14 is an outer shell, disposed outside the drive mechanism 13, the first piston 210, and the second piston 212, and configured to protect the drive mechanism 13, the first piston 210, and the second piston 212.

For example, as shown in FIG. 6, the fastening portion 14 includes three parts: a first fastening housing 201, a second fastening housing 216, and a third fastening housing 208. The first fastening housing 201 is disposed on a right side of the drive mechanism 13, the second fastening housing 216 is disposed on a left side of the drive mechanism 13, and the third fastening housing 208 is disposed between the first fastening housing 201 and the second fastening housing 216, and is separately connected to the first fastening housing 201 and the second fastening housing 216.

In some embodiments, the first fastening housing 201 includes a fifth side wall 2011, and the second fastening housing 216 includes a sixth side wall 2161. The fifth side wall 2011 and the sixth side wall 2161 are disposed opposite to each other in a direction x. The fifth side wall 2011 is connected to the first elastic component 202, and the sixth side wall 2161 is connected to the second elastic component.

The first fastening housing 201 further includes a seventh side wall 2012 and an eighth side wall 2013 that are disposed opposite to each other in a direction y. Two ends of the fifth side wall 2011 are respectively connected to a first end of the seventh side wall 2012 and a first end of the eighth side wall 2013, so that the entire first fastening housing 201 is generally in a tube or frame shape, to help the seventh side wall 2012 and the eighth side wall 2013 be fixed relative to each other, and help an overall structure be stable.

The second fastening housing 216 further includes a ninth side wall 2162 and a tenth side wall 2163 that are disposed opposite to each other in the direction y. Two ends of the sixth side wall 2161 are respectively connected to a first end of the ninth side wall 2162 and a first end of the tenth side wall 2163, so that the entire second fastening housing 216 is generally in a tube or frame shape, to help the ninth side wall 2162 and the tenth side wall 2163 be fixed relative to each other, and help an overall structure be stable.

A shape of the third fastening housing 208 is not limited in this embodiment of this application. In some embodiments, the third fastening housing 208 may adopt a tube structure or a frame structure. For example, as shown in FIG. 6, the third fastening housing 208 includes an eleventh side wall 2081, a twelfth side wall 2082, and a thirteenth side wall 2083 that are spaced from each other in the direction y.

A first end of the eleventh side wall 2081 is connected to a second end of the seventh side wall 2012, and a second end of the eleventh side wall 2081 is connected to a second end of the ninth side wall 2162. A first end of the thirteenth side wall 2083 is connected to a second end of the eighth side wall 2013, and a second end of the thirteenth side wall 2083 is connected to a second end of the tenth side wall 2163.

An opening is disposed on the thirteenth side wall 2083, and the brake disc 211 is at least partially mounted to the fastening portion 14 through the opening.

The eleventh side wall 2081 and the thirteenth side wall 2083 may be disposed to jointly form a tube or frame shape. The twelfth side wall 2082 is located in an area enclosed by the eleventh side wall 2081 and the thirteenth side wall 2083.

The twelfth side wall 2082 and the thirteenth side wall 2083 may be disposed to jointly form a tube or frame shape.

In some embodiments, the first transmission component includes a first gear 106, a second gear 206, a first screw 205, and a first screw nut 209. The first gear 106 is sleeved on the transmission shaft 104, the second gear 206 is sleeved on the first screw 205, the first gear 106 meshes with the second gear 206, the first screw nut 209 is in threaded connection to the first screw 205, and the first piston 210 is connected to the first screw nut 209.

To implement connection between the drive mechanism and the fastening portion 14, in some embodiments, the brake mechanism further includes the first housing 203. The first housing 203 is disposed in the fastening portion 14. The first piston 210 and the second piston 212 are in transmission connection to the drive mechanism. The drive mechanism is connected to the first housing 203. The first housing 203 is connected to the fastening portion 14 through the elastic component 202. In this way, the first piston 210 and the second piston 212 are movably mounted to the fastening portion 14. In this way, when the first piston 210 or the second piston 212 is in contact with the brake disc 211 and uneven wear occurs between the first piston 210 or the second piston 212 and the brake disc 211, a reactive force of the brake disc 211 on the first piston 210 or the second piston 212 is transmitted to the elastic component 202 through the drive mechanism 13 and the first housing 203 in sequence. Under an action of the reactive force, the elastic component 202 may drive the first housing 203 to move in the second direction, and the drive mechanism 13, the first piston 210, and the second piston 212 move accordingly, so that forces on two sides of the brake disc 211 are consistent, and braking performance is improved.

In some embodiments, the fastening portion 14 further includes a second guide portion 2010, where the first housing 203 is movably connected to the fastening portion 14 through the second guide portion 2010, the first housing 203 is capable of moving relative to the fastening portion 14 along the second guide portion 2010, and an extension direction of the second guide portion 2010 is parallel to the first direction.

In this way, the second guide portion 2010 is disposed, so that the first housing 203 can drive the first piston 210 and the second piston 212 to move along the second guide portion 2010, to avoid floating of the first housing 203 in the fastening portion 14 in another direction.

In some embodiments, the second guide portion 2010 may be a guide rail, a protrusion is disposed on the first housing 203, and the protrusion matches the guide rail. Alternatively, the second guide portion 2010 is a first spline, a second spline is disposed on the first housing 203, and the first spline mates with the second spline.

In some other embodiments, a shape of the first housing 203 matches an inner wall of the fastening portion 14. For example, the first housing 203 may be of a columnar structure, and the fastening portion 14 may have a tubular structure, to be sleeved on the first housing 203, so as to slide left and right along the fastening portion 14.

In some embodiments, the first transmission component is connected to the first housing 203.

The following describes a connection manner between the first housing 203 and the first transmission component with reference to FIG. 5.

As shown in FIG. 5, the transmission shaft 104 is connected to the first housing 203 through a first bearing 105, and the first screw 205 is connected to the first housing 203 through a second bearing 204.

The first bearing 105 may be fastened to the first housing 203, an axis of the first bearing 105 and an axis of the transmission shaft 104 are coaxially disposed, and the transmission shaft 104 is rotatably assembled in the first bearing 105. The second bearing 204 may be fastened to the first housing 203, an axis of the second bearing 204 and an axis of the first screw 205 are coaxially disposed, and the first screw 205 is rotatably assembled in the second bearing 204.

The first housing 203 may be provided with a first bearing chamber and a second bearing chamber, the first bearing 105 may be disposed in the first bearing chamber, the second bearing 204 may be disposed in the second bearing chamber, an outer ring of the first bearing 105 is fastened to an inner wall of the first bearing chamber, an inner ring of the first bearing 105 is rotatably connected to the transmission shaft 104, an outer ring of the second bearing 204 is fastened to an inner wall of the second bearing chamber, and an inner ring of the second bearing 204 is rotatably connected to the first screw 205.

During parking braking, the controller 108 controls the motor 101 to operate. The torque output by the motor 101 is transmitted to the transmission shaft 104 through the gear box 102, and then is transmitted to the first gear 106 through the transmission shaft 104. The first gear 106 transmits the rotatory motion of the transmission shaft 104 to the second gear 206 that meshes with the first gear 106, to drive the transmission shaft 104, the first gear 106, and the second gear 206 to rotate. The second gear 206 drives the first screw 205 to rotate. The first screw nut 209 is configured to convert a rotatory motion of the first screw 205 into a linear motion, so that the first screw nut 209 is pushed to move along the first screw 205. The first screw nut 209 drives the first piston 210 to move.

Similarly, under an action of the transmission shaft 104, a second screw 213 rotates accordingly. A second screw nut is configured to convert a rotatory motion of the second screw 213 into a linear motion, so that the second screw nut is pushed to move along the second screw 213. The second screw nut drives the second piston 212 to move.

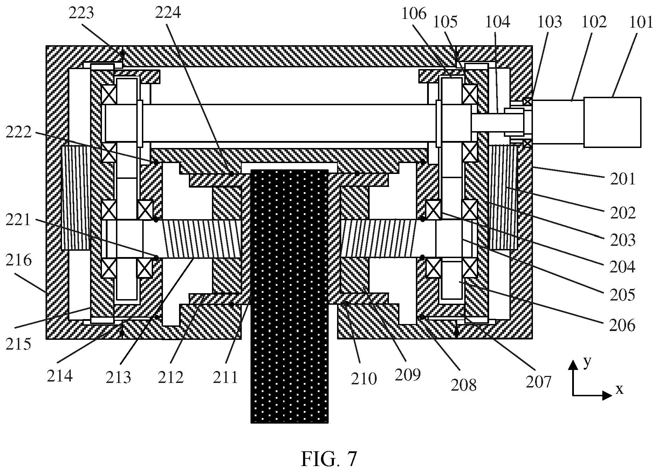

FIG. 7 is a diagram of the brake mechanism in FIG. 5 in a parking braking state. As shown in FIG. 7, both the first piston 210 and the second piston 212 are in contact with the brake disc 211, to implement parking braking.

In some embodiments, a thread rotation direction of the first screw 205 is opposite to a thread rotation direction of the second screw 213. For example, the first screw 205 adopts a righthand thread, and the second screw adopts a left-hand thread. The first screw 205 and the second screw 213 respectively drive the corresponding screw nuts to move forward, to respectively push the first piston 210 and the second piston 212 to move forward, so as to implement parking braking.

To prevent the first piston 210 from shaking in the direction y, a guide portion may be further disposed in the first housing, to limit movement of the first piston 210 in the direction y.

In some embodiments, the third fastening housing 208 may be used as the guide portion. The first piston 210 is disposed in the third fastening housing 208, and the first piston 210 can move along the third fastening housing 208.

A shape of the first piston 210 matches an inner wall of the third fastening housing 208. For example, the first piston 210 may be of a columnar structure, and the third fastening housing 208 may be of a tubular structure, to be sleeved on the first housing 203, so as to slide left and right along the fastening portion 14.

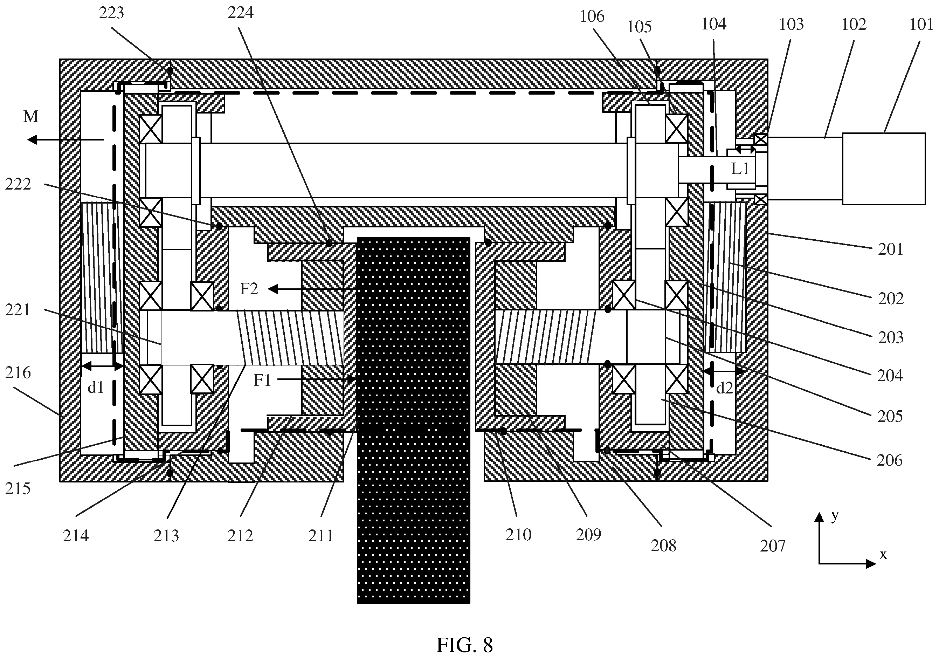

In some embodiments, as shown in FIG. 8, during parking braking, when there is a deviation between a distance from the first piston 210 to the brake disc and a distance from the second piston 212 to the brake disc, for example, when the second piston 212 is in contact with the brake disc 211, and the first piston 210 is not in contact with the brake disc 211, under driving of the motor 101, a contact force F1 between the second piston 212 and the brake disc 211 increases. When the contact force F1 reaches a specific threshold and exceeds a trigger force of the elastic component 202, a reactive force of the brake disc on the second piston 212 is transmitted to the elastic component 202 through the drive mechanism 13 and a fourth housing 215 in sequence. The elastic component 202 may drive the fourth housing 215 to move in the second direction, and the drive mechanism 13, the first piston 210, and the second piston 212 move accordingly. In other words, the reactive force of the brake disc 211 may push a part in a dashed-line box in the figure to move in a direction M. In this case, the fourth housing 215 moves in the direction M in the fastening portion 14 accordingly, and the transmission shaft 104 may move in the direction M relative to the output shaft of the motor 101 with the first housing 203.

Before the part in the dashed-line box in FIG. 8 moves in the M direction, a size of the first elastic component is d1, a size of the second elastic component is d2, and a size of a matching part between the transmission shaft 104 and the output shaft of the motor 101 is L1.

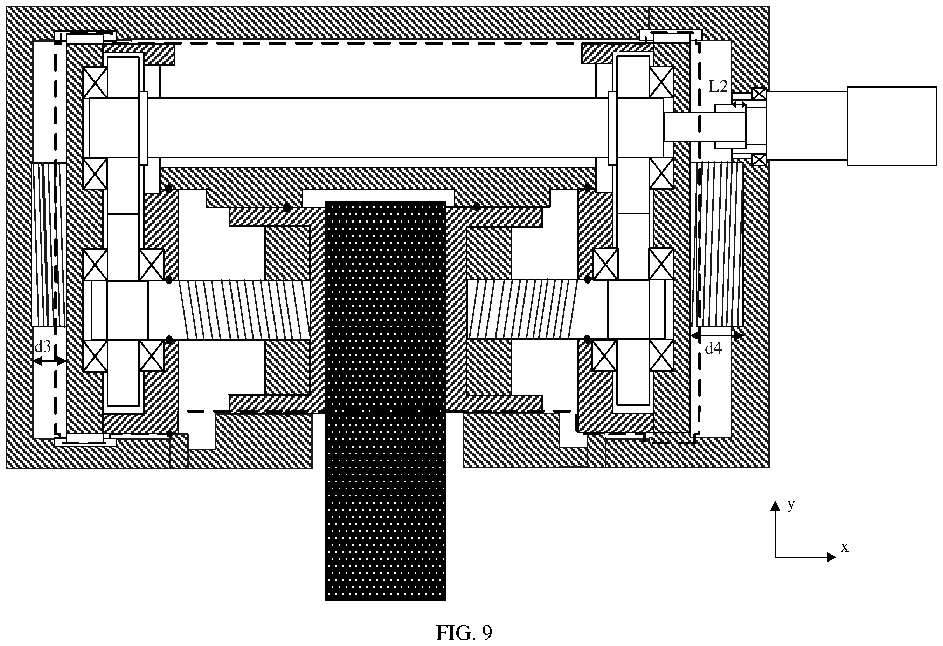

As shown in FIG. 9, after the part in the dashed-line box moves to a balance position in the M direction, the size of the first elastic component is d3, the size of the second elastic component is d4, and the size of the matching part between the transmission shaft 104 and the output shaft of the motor 101 is L2, where d3 is greater than d1, d4 is less than d2, and L2 is less than L1. In this way, after the part in the dashed-line box moves in the M direction, the first piston 210 is in contact with the brake disc 211, to implement simultaneous braking on two sides. In this process, contact pressures of the first piston 210 and the second piston 212 on the brake disc 211 are basically consistent. This may be equivalent to adjusting an activation threshold of the elastic component 202. Therefore, braking on the two sides can be well implemented, to eliminate an impact of uneven wear during parking braking and a large parking braking force deviation between two park brake systems, so that forces on the two sides of the brake disc 211 are consistent, and braking performance is improved.

In FIG. 8 and FIG. 9, an example in which the second piston 212 is in contact with the brake disc 211 and uneven wear occurs between the second piston 212 and the brake disc 211 is used for description. When the first piston 210 is in contact with the brake disc 211 and uneven wear occurs between the first piston 210 and the brake disc 211, for a modulation process of the elastic component, refer to the foregoing descriptions. Details are not described herein again.

According to the brake mechanism provided in this embodiment of this application, the elastic component 202 is disposed, so that when the forces on the two sides of the brake disc 211 are unbalanced, the first piston 210 and the second piston 212 can be driven to move, to make the forces on the two sides of the brake disc 211 balanced, so as to avoid uneven wear and improve braking performance.

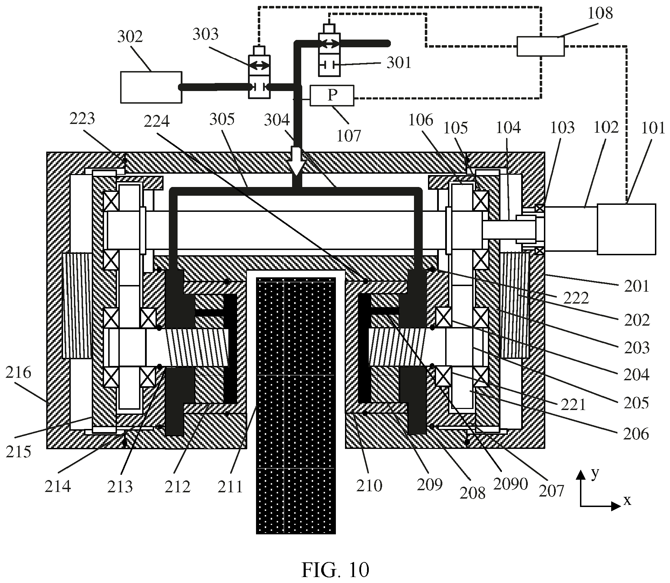

The following describes a structure of the hydraulic drive mechanism with reference to FIG. 10. As shown in FIG. 10, the drive mechanism further includes a hydraulic drive mechanism. The hydraulic drive mechanism may be configured for service braking. During driving, when a user steps on a pedal, a pedal travel sensor receives a signal and transmits the signal to a controller. The controller receives the signal, and controls a brake mechanism to activate a braking mode. The hydraulic drive mechanism 13 drives the first piston 210 and the second piston 212 to move towards each other to approach the brake disc 211, so as to implement service braking.

As shown in FIG. 10, the hydraulic drive mechanism includes a hydraulic pipe. The brake mechanism further includes a second housing 207. The second housing 207 is connected to the first housing 203.

In some embodiments, the second housing 207 is partially located in the third fastening housing 208. A first cavity is enclosed by the second housing 207, the first piston 210, the first screw nut 209, and the third fastening housing 208. The first cavity is connected to the hydraulic pipe. The first piston 210 is configured to move along the first screw nut 209 when brake fluid is supplied to the first cavity through the hydraulic pipe.

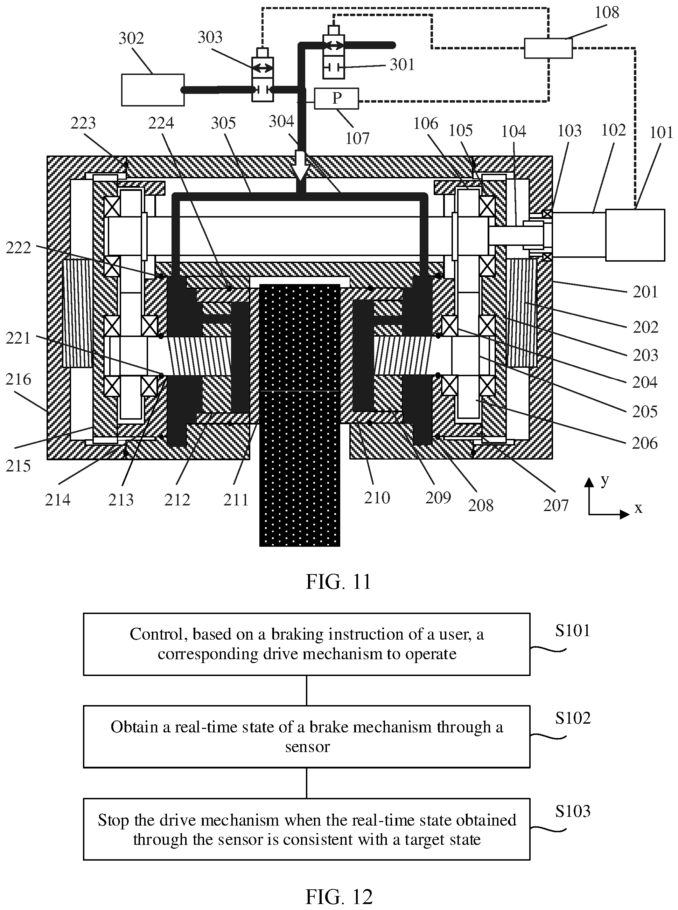

In some embodiments, as shown in FIG. 10 and FIG. 11, a through hole 2090 is disposed in the first screw nut 209, and the brake fluid is supplied to the first cavity through the hydraulic pipe. In this case, the brake fluid may enter a gap between the first screw nut 209 and the first piston 210 through the through hole 2090, to push the first piston 210 to move along the first screw nut 209.

In some embodiments, the brake mechanism further includes a third housing 214 and a fourth housing 215. The fourth housing 215 is connected to the transmission mechanism, and the third housing 214 is connected to the fourth housing 215.

In some embodiments, the third housing 214 is partially located in the third fastening housing 208. A second cavity is enclosed by the third housing 214, the second piston 212, and the third fastening housing 208. The second cavity is connected to the hydraulic pipe. The second piston 212 is configured to move along the second screw nut when the brake fluid is supplied to the second cavity through the hydraulic pipe.

In some embodiments, the hydraulic drive mechanism further includes a first solenoid valve 301, a first hydraulic pipe 304, and a second hydraulic pipe 305.

The first solenoid valve 301 is connected to an internal cavity of the first piston 210 through the first hydraulic pipe 304, and the hydraulic fluid may push the first piston 210 to move. The first solenoid valve 301 is connected to an internal cavity of the second piston 212 through the second hydraulic pipe 305, and the hydraulic fluid may push the second piston 212 to move.

In some embodiments, the first solenoid valve 301 is connected to the controller 108. During parking braking, the controller 108 responds to a braking signal, and supplies the hydraulic fluid to the internal cavity of the first piston 210 and the internal cavity of the second piston 212 through the first solenoid valve 301, to push the first piston 210 and the second piston 212 to move.

In some embodiments, the first solenoid valve 301 is a normally open solenoid valve. For example, when a driver steps on the braking pedal, in a normal state, the controller 108 may control a drive pump to generate a hydraulic pressure, and an oil channel between the first hydraulic pipe 304 and the internal cavity of the first piston 210, and an oil channel between the second hydraulic pipe 305 and the internal cavity of the second piston 212 are connected, so that the hydraulic pressure generated by the drive pump is provided to a wheel brake, to make the wheel brake perform braking. When power is off, the first solenoid valve 301 is in an open state due to power-off, and the oil channel between the first hydraulic pipe 304 and the internal cavity of the first piston 210, and the oil channel between the second hydraulic pipe 305 and the internal cavity of the second piston 212 are connected. When the user steps on the braking pedal, the hydraulic pressure generated by the braking pedal is provided to the hydraulic drive mechanism.

In some embodiments, the hydraulic drive mechanism further includes an oil can 302, a second solenoid valve 303, and a pressure sensor 107. The oil can 302 is connected to the hydraulic pipe through the second solenoid valve 303. The second solenoid valve 303 and the first solenoid valve 301 are connected to the controller 108 through a signal line. The pressure sensor 107 is connected to the hydraulic pipe. The pressure sensor 107 is configured to measure a pressure of the hydraulic pipe and feed back a signal to the controller 108.

In some embodiments, the second solenoid valve 303 is a normally closed solenoid valve. When power is on, the normally open solenoid valve is in an open state due to power-on, so that an oil channel between the brake mechanism and the oil can 302 is connected.

In this way, the controller 108 may control, based on a pressure signal detected by the pressure sensor 107, the second solenoid valve 303 to be open or closed. For example, when determining, based on the pressure signal detected by the pressure sensor 107, that the hydraulic pressure is insufficient, the controller 108 may control the second solenoid valve 303 to be open, to supply the brake fluid to the hydraulic pipe through the oil can 302. When determining, based on the pressure signal detected by the pressure sensor 107, that the hydraulic pressure is excessively high, the controller 108 may control the second solenoid valve 303 to be open, to make excessive brake fluid in the hydraulic pipe flow to the oil can 302.

In some embodiments, the first screw nut 209 includes a fourth guide portion 2091, and the first piston 210 includes a second movable portion 2100. The fourth guide portion 2091 may drive the second movable portion 2100 to rotate with the first screw nut 209, and the second movable portion 2100 can move along the fourth guide portion 2091. An extension direction of the fourth guide portion 2091 is parallel to the first direction.

In this way, the first screw nut 209 can be in transmission connection to the first piston 210 through cooperation of the fourth guide portion 2091 and the second movable portion 2100. During parking braking, a torque output by the motor 101 may be transmitted to the first piston 210 through the first screw nut 209. During service braking, the brake fluid is introduced into the first cavity, and the first piston 210 is pushed by the brake fluid, to move along the fourth guide portion 2091.

In some embodiments, the fourth guide portion 2091 may be a guide rail, the second movable portion 2100 may be a protrusion, and the protrusion matches the guide rail.

In some other embodiments, the fourth guide portion 2091 may be an internal spline, and the second movable portion 2100 may be an external spline. For example, the first piston 210 may have a second mounting hole, the second mounting hole is disposed in the first direction, and an inner wall of the second mounting hole has an internal spline. The first screw nut 209 may extend into the second mounting hole, and an outer wall of the first screw nut 209 has an external spline mating with the internal spline.

In some embodiments, during service braking, when there is a deviation between a distance from the first piston 210 to the brake disc 211 and a distance from the second piston 212 to the brake disc 211, for example, when the second piston 212 is in contact with the brake disc 211, and the first piston 210 is not in contact with the brake disc 211, under driving of the hydraulic drive mechanism, a contact force between the second piston 212 and the brake disc 211 increases. When the contact force reaches a specific threshold and exceeds a trigger force of the elastic component 202, a reactive force of the brake disc 211 on the second piston 212 is transmitted to the elastic component 202 through the drive mechanism and the third housing 214 in sequence. The elastic component 202 may drive the third housing 214 to move in the second direction, and the drive mechanism, the first piston 210, and the second piston 212 move accordingly. In other words, the reactive force of the brake disc 211 may push a part in the fastening portion 14 to move in a direction opposite to the contact force. In this case, the transmission shaft 104 may move relative to an output shaft of the motor 101 with the third housing 214.

In this way, after a part in the fastening portion 14 moves, the first piston 210 is in contact with the brake disc 211, to implement simultaneous braking on two sides. In this process, contact pressures of the first piston 210 and the second piston 212 on the brake disc 211 are basically consistent. This may be equal to adjusting an activation threshold of the elastic component 202. Therefore, braking on the two sides can be well implemented, to eliminate an impact of uneven wear during parking braking, and a large parking braking force deviation between park brake systems, so that forces on the two sides of the brake disc 211 are consistent, and braking performance is improved.

In the foregoing embodiment, an example in which the second piston 212 is in contact with the brake disc 211 and uneven wear occurs between the second piston 212 and the brake disc 211 is used for description. When the first piston 210 is in contact with the brake disc 211 and uneven wear occurs between the first piston 210 and the brake disc 211, for a modulation process of the elastic component, refer to the foregoing descriptions. Details are not described herein again.

According to the brake mechanism provided in this embodiment of this application, the elastic component 202 is disposed, so that when the forces on the two sides of the brake disc 211 are unbalanced, the first piston 210 and the second piston 212 can be driven to move, to make the forces on the two sides of the brake disc 211 balanced, so as to avoid uneven wear and improve braking performance.

In some embodiments, to prevent leakage of the brake fluid in the second cavity, sealing members may be further disposed between components that enclose the second cavity. For example, first sealing members 221 are disposed between the second housing 207 and the first screw 205, and between the fourth housing 215 and the second screw 213. In this way, the brake fluid can be prevented from leaking from a gap between the second housing 207 and the first screw 205, and a gap between the fourth housing 215 and the second screw 213.

For example, second sealing members 222 are disposed between the second housing 207 and the third fastening housing 208, and between the fourth housing 215 and the third fastening housing 208. In this way, the brake fluid can be prevented from leaking from a gap between the second housing 207 and the third fastening housing 208, and a gap between the fourth housing 215 and the third fastening housing 208.

For example, a third sealing member 224 is disposed between the first piston 210 and the third fastening housing 208. In this way, the brake fluid can be prevented from leaking from a gap between the first piston 210 and the third fastening housing 208.

In some other embodiments, fourth sealing members 223 may be further disposed between the first fastening housing 201 and the third fastening housing 208, and between the second fastening housing 216 and the third fastening housing 208, to prevent external impurities from entering the fastening portion 14, so as to better protect a structure inside the fastening portion 14.

Embodiments of this application provide a brake mechanism, a brake system, and a vehicle. The brake mechanism includes a fastening portion, a drive mechanism, a first piston, a second piston, and an elastic component. The first piston and the second piston are respectively disposed on two sides of a brake disc, and both the first piston and the second piston are in transmission connection to the drive mechanism. The drive mechanism is connected to the fastening portion through the elastic component. The drive mechanism is configured to: drive the first piston to move towards the brake disc in a first direction and drive the second piston to move towards the brake disc in a second direction. The first direction is opposite to the second direction.

In some embodiments, the drive mechanism includes a transmission shaft, a first gear, a second gear, a first screw, and a first screw nut. The transmission shaft is in transmission connection to an output shaft of a motor, the motor is fastened to the fastening portion, the first gear is sleeved on the transmission shaft, the second gear is sleeved on the first screw, the first gear meshes with and the second gear, the first screw nut is in threaded connection to the first screw, and the first piston is connected to the first screw nut; and the first gear and the second gear are configured to transmit a rotatory motion of the transmission shaft to the first screw nut through the first screw, and the first screw nut is configured to: convert a rotatory motion of the first screw into a linear motion, and drive the first piston to move. In this way, the drive mechanism may convert a rotatory motion of the output shaft of the motor into a linear motion, and transmit the linear motion to the first piston, to implement motor driving. The motor drive mechanism may be used in a parking braking mode. The drive mechanism includes a motor drive mechanism used in a parking braking scenario and a hydraulic drive mechanism used in a service braking scenario.

In some embodiments, the drive mechanism includes a hydraulic pipe and a second cavity connected to the hydraulic pipe, where the first piston is disposed in the second cavity, and the first piston is configured to move in the first direction when brake fluid is supplied to the second cavity through the hydraulic pipe. In this way, the drive mechanism may implement hydraulic driving, to implement service braking. The motor drive mechanism may drive, through one motor, pistons on the two sides to move, to improve drive efficiency, and implement a braking function of a fastening caliper during driving.

The elastic component is configured to drive the drive mechanism, the first piston, and the second piston to move in the second direction when the brake disc is in contact with the first piston and uneven wear occurs between the brake disc and the first piston; or the elastic component is configured to drive the drive mechanism, the first piston, and the second piston to move in the first direction when the second piston is in contact with the brake disc and uneven wear occurs between the brake disc and the second piston. Therefore, in the service braking scenario or the parking braking scenario, when the first piston or the second piston is in contact with the brake disc and uneven wear occurs between the first piston or the second piston and the brake disc, a reactive force of the brake disc on the first piston or the second piston is transmitted to the drive mechanism through the first piston or the second piston in contact with the brake disc, and then is transmitted to the elastic component through the drive mechanism. The elastic component elastically deforms under driving of the reactive force, and then may drive the drive mechanism, the first piston, and the second piston to move as a whole in a direction opposite to a direction of uneven wear, so that forces on the two sides of the brake disc are balanced. This avoids uneven wear and improves braking performance.

In some embodiments, an embodiment of this application further provides a control method for a brake mechanism. The method is shown in FIG. 12, and the method includes the following steps.

S101: Control, based on a braking instruction of a user, a corresponding drive mechanism to operate.

In some embodiments, before the instruction of the user is executed, a system check may be further performed. For example, states of a controller unit, a motor unit, a hydraulic unit, and the like may be checked, to determine system safety and function selectivity. In addition, a pressure sensor may be calibrated, and a motor angle sensor may be initialized and calibrated.

The instruction of the user includes a service braking instruction obtained by the controller when the user steps on a pedal, and a parking braking instruction obtained by the controller when the user presses an electronic park brake button.

In some embodiments, a corresponding operating mode may be selected based on the braking instruction of the user.

Operating modes of the brake mechanism include a parking braking mode and a service braking mode.

Controlling, based on the braking instruction of the user, the corresponding drive mechanism to operate includes the following content.

When the user steps on the pedal, a pedal travel sensor receives a signal and transmits the signal to the controller. The controller receives the signal, and controls the brake mechanism to activate the service braking mode.

In the parking braking mode, the controller 108 controls the motor 101 to operate. A torque output by the motor 101 is transmitted to a transmission shaft 104 through a gear box 102, and then is transmitted to a first gear 106 through the transmission shaft 104. The first gear 106 transmits a rotatory motion of the transmission shaft 104 to a second gear 206 that meshes with the first gear 106, to drive the transmission shaft 104, the first gear 106, and the second gear 206 to rotate. The second gear 206 drives a first screw 205 to rotate. A first screw nut 209 is configured to convert a rotatory motion of the first screw 205 into a linear motion, so that the first screw nut 209 is pushed to move along the first screw 205. The first screw nut 209 drives a first piston 210 to move.

Similarly, under an action of the transmission shaft 104, a second screw 213 rotates accordingly. A second screw nut is configured to convert a rotatory motion of the second screw 213 into a linear motion, so that the second screw nut is pushed to move along the second screw 213. The second screw nut drives a second piston 212 to move.

Alternatively, when the user presses the electronic park brake button, a braking signal is transmitted to the controller. The controller receives the signal, and controls the brake mechanism to activate the parking braking mode.

In the service braking mode, the controller 108 controls a hydraulic drive mechanism to drive hydraulic fluid to enter a cavity in the first piston 210 and a cavity in the second piston 212, to push the first piston 210 and the second piston 212 to move.

S102: Obtain a real-time state of the brake mechanism through a sensor.

In some embodiments, the sensor includes the pressure sensor configured for the hydraulic drive mechanism and the motor angle sensor configured for a motor drive mechanism.

A real-time signal includes: a pressure of the hydraulic pipe obtained through the pressure sensor in real time, and a rotation angle of the motor 101 obtained through the motor angle sensor in real time.

S103: Stop the drive mechanism when the real-time state obtained through the sensor is consistent with a target state.

In some embodiments, obtaining the real-time signal of the brake mechanism through the sensor, and stopping the drive mechanism when the real-time signal is consistent with the target signal includes the following content.

The controller obtains the rotation angle of the motor 101 through the motor angle sensor, and compares the rotation angle of the motor obtained through the motor angle sensor with a target angle. When the rotation angle of the motor is consistent with the target angle, the motor is controlled to stop operating.

Alternatively, the controller obtains the pressure of the hydraulic pipe through the pressure sensor, and compares the pipeline pressure obtained through the pressure sensor with a target pressure. When the pipeline pressure is consistent with the target pressure, a solenoid valve is controlled to be closed.

In this way, electronic parking braking can be implemented. For a vehicle that adopts electronic parking braking, when the vehicle is turned off, even if the user forgets to pull a handbrake, a system may automatically complete parking; and when the vehicle starts, if a driver forgets to release the handbrake, parking braking may also be automatically released. When the vehicle starts on a slope, the vehicle may not roll back. This makes the vehicle more intelligent, simpler, and safer, and reduces an accident rate.

An electronic parking system may adopt the foregoing brake mechanism. The elastic component is disposed, so that when forces on two sides of a brake disc are unbalanced, the first piston and the second piston can be driven to move, to make the forces on the two sides of the brake disc balanced. This avoids uneven wear and improves braking performance.

An embodiment of this application further provides a controller. The controller may be a controller of a vehicle, for example, may be a brake controller of the vehicle, and may be configured to perform the foregoing brake control method. In the method, a piston may be in contact with a brake disc, to implement vehicle braking.

It may be understood that, to implement functions of any one of the foregoing embodiments, a brake system includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the brake system may be divided into functional modules. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In practice, another division manner may be used.

It should be further understood that the modules in the brake system may be implemented in a form of software and/or hardware. This is not specifically limited herein. In other words, the electronic device is presented in a form of functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive solid state disk (SSD)), or the like.

Method or algorithm steps described with reference to embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, the storage medium is coupled to the processor, so that the processor can read information from the storage medium and write information to the storage medium. Certainly, the storage medium may be a component of the processor. The processor and the storage medium may be disposed in an ASIC. In addition, the ASIC may be located in an electronic device. Certainly, the processor and the storage medium may alternatively exist as discrete components in a brake system.

The foregoing descriptions are merely specific implementations of this application, but are not intended to limit the protection scope of this application. Any variation or replacement in the technical scope disclosed in this application shall fall in the protection scope of this application. Therefore, the protection scope of this application shall be subject to the protection scope of the claims.

## Claims

1. A brake mechanism, comprising a fastening portion (14), a drive mechanism (13), a first piston (210), a second piston (212), and an elastic component (202), wherein
the first piston (210) and the second piston (212) are respectively disposed on two sides of a brake disc (211), both the first piston (210) and the second piston (212) are in transmission connection to the drive mechanism (13), and the drive mechanism (13) is connected to the fastening portion (14) through the elastic component (202);
the drive mechanism (13) is configured to: drive the first piston (210) to move towards the brake disc (211) in a first direction, and drive the second piston (212) to move towards the brake disc (211) in a second direction, wherein the first direction is opposite to the second direction; and
the elastic component (202) is configured to: when the brake disc (211) is in contact with the first piston (210), drive the drive mechanism (13), the first piston (210), and the second piston (212) to move in the second direction; or
the elastic component (202) is configured to: when the brake disc (211) is in contact with the second piston (212), drive the drive mechanism (13), the first piston (210), and the second piston (212) to move in the first direction.

2. The brake mechanism according to claim 1, wherein the drive mechanism (13) comprises a transmission shaft (104) and a first transmission component, wherein the transmission shaft (104) is connected to an output shaft of a motor (101), the motor (101) is fastened to the fastening portion (14), and the first transmission component is configured to: convert a rotatory motion of the transmission shaft (104) into a linear motion, and transmit the linear motion to the first piston (210).

3. The brake mechanism according to claim 2, wherein a first guide portion (1021) is disposed on the output shaft of the motor (101), a first movable portion (1041) that matches the first guide portion (1021) is disposed on the transmission shaft (104), the first guide portion (1021) is capable of driving the first movable portion (1041) to rotate with the transmission shaft (104), the first movable portion (1041) is capable of moving along the first guide portion (1021), and an extension direction of the first guide portion (1021) is parallel to the first direction.

4. The brake mechanism according to claim 2 or 3, wherein the first transmission component comprises: a first gear (106), a second gear (206), a first screw (205), and a first screw nut (209), wherein
the first gear (106) is sleeved on the transmission shaft (104), the second gear (206) is sleeved on the first screw (205), the first gear (106) meshes with the second gear (206), the first screw nut (209) is in threaded connection to the first screw (205), and the first piston (210) is connected to the first screw nut (209); and
the first gear (106) and the second gear (206) are configured to transmit a rotatory motion of the transmission shaft (104) to the first screw nut (209) through the first screw (205), and the first screw nut (209) is configured to: convert a rotatory motion of the first screw (205) into a linear motion, and drive the first piston (210) to move.

5. The brake mechanism according to claim 4, wherein the brake mechanism further comprises a second screw (213) that is in transmission connection to the transmission shaft (104), wherein the second screw (213) is in transmission connection to the second piston (212), and a thread rotation direction of the first screw (205) is opposite to a thread rotation direction of the second screw (213).

6. The brake mechanism according to claim 4 or 5, wherein the brake mechanism further comprises a first housing (203), wherein the transmission shaft (104) is connected to the first housing (203) through a first bearing (105), and the first screw (205) is connected to the first housing (203) through a second bearing (204).

7. The brake mechanism according to claim 6, wherein the first housing (203) is connected to the fastening portion (14) through the elastic component (202).

8. The brake mechanism according to claim 7, wherein the fastening portion (14) comprises a second guide portion (2010), wherein the first housing (203) is movably connected to the fastening portion (14) through the second guide portion (2010), the first housing (203) is capable of moving relative to the fastening portion (14) along the second guide portion (2010), and an extension direction of the second guide portion (2010) is parallel to the first direction.

9. The brake mechanism according to any one of claims 1 to 8, wherein the drive mechanism (13) comprises a hydraulic pipe and a second cavity connected to the hydraulic pipe, wherein the first piston (210) is disposed in the second cavity, and the first piston (210) is configured to move in the first direction when brake fluid is supplied to the second cavity through the hydraulic pipe.

10. The brake mechanism according to claim 9, wherein the drive mechanism (13) comprises a third guide portion (2091), wherein the first piston (210) is sleeved on the third guide portion (2091), the first piston (210) is capable of moving along the third guide portion (2091), and an extension direction of the third guide portion (2091) is parallel to the first direction.

11. The brake mechanism according to claim 9 or 10, wherein the fastening portion (14) comprises a fourth guide portion, wherein the first piston (210) is disposed in the fourth guide portion, the first piston (210) is capable of moving along the fourth guide portion, and an extension direction of the fourth guide portion is parallel to the first direction.

12. The brake mechanism according to claim 11, wherein the brake mechanism further comprises a second housing (207), wherein the second housing (207) is connected to the drive mechanism (13), the second housing (207) is at least partially disposed in the fourth guide portion, and the second cavity is enclosed by the second housing (207), the fourth guide portion, and the first piston (210).

13. The brake mechanism according to claim 11 or 12, wherein a first sealing member is disposed between the fourth guide portion and the second housing (207); and a second sealing member is disposed between the first piston (210) and the fourth guide portion.

14. A brake system, comprising a controller and the brake mechanism according to any one of claims 1 to 13, wherein the controller is electrically connected to the drive mechanism (13), and the controller is configured to control the drive mechanism (13) to drive the first piston (210) and the second piston (212) to approach or move away from the brake disc (211).

15. A vehicle, comprising wheels and the brake system according to claim 14, wherein the wheel is fastened to the brake disc (211) of the brake system.
